# EUROPEAN PATENT APPLICATION

(11) **EP 2 082 908 A1**
(43) Date of publication of application: **29.07.2009**
(21) Application number: 08001271.9
(22) Date of filing: 24.01.2008
(51) Int. Cl.: B60J 1/18, E05B 65/19, E05B 17/22

(54) **Actuating device**

(71) Applicant: GM Global Technology Operations, Inc., Detroit, MI 48265-3000 (US)
(72) Inventor: Sibley, Paul, SG17 5UR Shefford (GB); Taylor, Phillip, SG17 5TX Shefford (GB); Keane, Simon, AL4 9AH St Albans (GB); Morris, Clair, MK43 0JZ Marston Moretains (GB)
(74) Representative: Strauss, Peter

(57) **Abstract**

An actuating device comprises a flap member (100), for example a vehicle liftglass, pivotably connected over an opening in a wall member (115), such as a vehicle tailgate, in which a latching member can prevent the flap member (100) from pivoting. The latching member is released upon actuation of a proximity sensor (130). The proximity sensor (130) may be provided in the liftglass handle.

## Description

This invention relates to actuating devices comprising a flap member with a latching member. The invention is particularly suitable for a vehicle liftglass.

Vehicles are regularly exposed to the effects of the weather as they are being driven or while they are parked on driveways or streets. In addition, the back of the vehicle is subject to exhaust fumes rising from the exhaust pipe and to spray and dirt that is thrown up from the wheels. The result is inevitably that within a very short time of the vehicle being cleaned, the back of the vehicle becomes dirty to touch.

Many vehicles have tailgates, which are doors or gates at the rear which are hinged at the top. The accumulating dirt is particularly inconvenient where the tailgate has a liftglass, which is an opening section of window which is hinged at the top. These usually have a manually actuated button to unlatch them, requiring the user to dirty his hands.

In addition, it is often the case that a user wishes to unlatch a liftglass when he has something to put in the boot of the vehicle. Consequently, the user often has his hands full, and is required to put an item down on the ground or lean it against the vehicle while he unlatches the liftglass.

Aspects of the present invention seek to overcome or reduce one or more of the above problems.

According to a first aspect of the invention, there is provided an actuating device comprising a flap member pivotably connected over an opening in a wall member wherein the flap member is adjustable between a locked state, in which the flap member is held substantially coplanar with the wall member by a latching member, and a released state, in which the flap member is free to pivot about its connection to the wall member characterised by a proximity sensor, which is arranged so that upon actuation it causes the device to move from the locked state to the released state.

This provides the advantage that a user does not need to operate a manually actuated latch button which may be inconvenient if his hands are full or undesirable if it is dirty or otherwise contaminated.

Preferably, the proximity sensor is provided in a handle of the flap member. This provides the proximity sensor at a convenient location so a user unfamiliar with the device will inadvertently release the latching member when he reaches for the handle in the normal way.

According to a second aspect of the present invention, there is provided a vehicle including an actuating device according to the first aspect of the invention.

Preferred embodiments will now be described, by way of example only, with reference to the accompanying drawings, in which:
Figure 1 is a rear view of a vehicle tailgate liftglass showing an actuating device in accordance with an embodiment of the invention; and
Figure 2 is a partial side cross-sectional view of the embodiment of Figure 1 taken through the line AA.

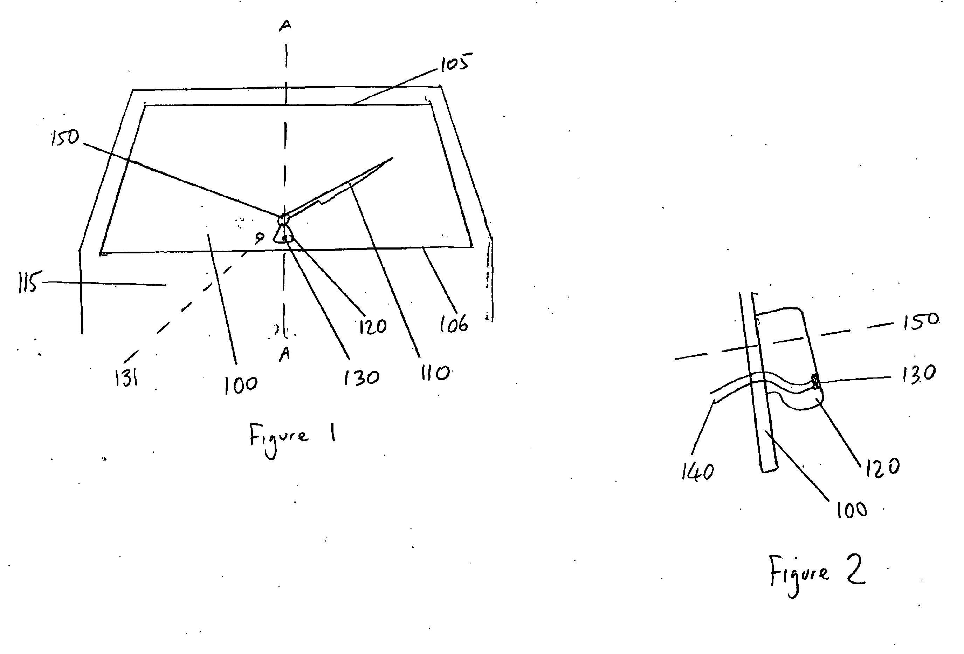

Figures 1 and 2 show a tailgate liftglass 100, which is hinged along its top edge 105. The liftglass 100 can be pivoted about its hinged edge 105 into an open position or a closed position. In the closed position, as shown in Figure 1, the liftglass 100 lies substantially coplanar with a tailgate 115 to which it is hinged. In the open position, the liftglass 100 is pivoted away from the vehicle, leaving a gap between a bottom edge 106 of the liftglass 100 and the tailgate 115 through which a user may access the inside of the vehicle.

The liftglass 100 is provided with a wiper 110 in a conventional manner. The liftglass 100 is also provided with a handle 120 on the external surface of the liftglass 100 in the vicinity of the wiper spindle 150. The handle 120 is a projection designed according to ergonomic principles by means of which a user may pull the liftglass 100 to cause it to pivot about its hinged edge 105.

The liftglass is also provided with a flap raising device in the form of springs which are under compression when the liftglass 100 is in the closed position.

The liftglass 100 is also provided with a latching member (not shown). The latching member holds the liftglass 100 in position with respect to the tailgate 115 when the liftglass 100 is in the closed position. The liftglass 100 then cannot be pivoted about its hinged edge 105. The latching member can be released by a signal from the body controller (i.e. the electronic control unit) of the vehicle.

In the handle 120 there is provided a proximity sensor 130. The proximity sensor 130 is a conventional passive infrared proximity sensor. The proximity sensor 130 is provided at the rear-most surface of the handle 120, and is connected to the body controller of the vehicle by wiring connections 140.

The arrangement works in the following way.

When the liftglass 100 is in the closed position and a user wishes to open it, he places his hand in the vicinity of the proximity sensor 130. The hand emits thermal radiation in the infrared range into the sensor which causes a signal to be generated. The signal causes the body controller of the vehicle to cause the latching member of the liftglass 100 to be released.

Once the liftglass 100 has been unlatched, it may be pivoted by operation of the handle 120 into a position at which the force of the springs is greater than the weight of the liftglass 100 and the liftglass 100 is then raised by the springs to the open position.

When the user wishes to close the liftglass 100 again, he manually closes it by pushing on the handle 120 or on the liftglass 100 itself. When the liftglass 100 reaches the closed position, the latching member engages to hold the liftglass 100 securely in the closed position.

When the vehicle is locked or in motion, the proximity sensor 130 is deactivated so that an object passing near to it will not cause the liftglass 100 to unlatch.

In addition, the proximity sensor 130 is deactivated when the tailgate 115 is open. It is also deactivated for a short period after closing either the liftglass 100 or the tailgate 115 so the latching member is not unintentionally released by a user.

The embodiment described provides many advantages over the

### prior art.

By providing a proximity sensor 130 to unlatch the liftglass, a user does not have to release the latch by hand. Consequently, he can operate it without getting his hands dirty on a manually actuated latch button. In addition, he is able to unlatch the liftglass 100 easily even when his hands are full.

In addition, because there is no manually actuated latch button, the liftglass 100 does not need to be provided with a separate lock. When the vehicle is locked, the proximity sensor 130 is deactivated and the latching member is therefore inoperable, preventing anyone from opening the liftglass 100.

By providing the proximity sensor 130 on the liftglass handle 120, it is in a convenient place for the user to access it. In addition, even if a user is not aware of how the device works, he will inadvertently release the latch of the liftglass 100 when he reaches for the handle 120 in the normal way, thus saving him from having to investigate how to operate the device.

By providing a passive sensor, the device does not continually require power to be drawn for an LED. By providing an infrared sensor, the device is particularly well suited to detecting the warmth of a human hand.

Various modifications can be made to the above embodiment.

Instead of a passive infrared proximity sensor, any kind of proximity sensor can be used. For example, it can use a capacitive or reflective sensor.

The proximity sensor 130 does not need to be in the rear-most surface of the handle 120. It can be anywhere on the rear surface of the vehicle. For example, it can be integrated into the liftglass 100 itself (shown at 131) or provided in the bottom surface of the handle 120.

Instead of deactivating the proximity sensor 130 when it is not required, the body controller of the vehicle can simply ignore its signals.

Instead of using a fixed handle 120, a pivotable handle arrangement can be employed. Such an arrangement is disclosed in European patent application 07021381.4, filed 2 November 2007. In this modification, a handle normally lies against the surface of the liftglass 100 such that the underside of the handle is shielded from the dirt that accumulates over the outside. The handle is connected to a shaft member that passes through a hole in the liftglass 100. The shaft member is surrounded in the hole by a flexible grommet. At the inside of the vehicle, the shaft member is connected to a plate. The plate is connected by a resilient element to a spindle which is driven by a motor.

When the proximity sensor 130 is actuated, the motor is caused to rotate the spindle. This in turn moves the plate towards the inside surface of the liftglass 100 which causes the shaft member to pivot the handle free of the liftglass 100 revealing the clean inside surface. A user can then place his fingers under the handle to lift the liftglass by the clean surface.

An advantage of this method is that the user does not need to touch the dirty surface of the vehicle with his hand. The underside of the handle will have been protected from the effects of the weather, and this clean underside is made accessible by operation of a contact-free proximity sensor 130.

Instead of springs, the flap raising device can be gas struts.

The flap raising device can be arranged so that, in the closed position, the opening force is greater than the weight of the liftglass 100. In this case, when the proximity sensor 130 is actuated, the latch is released as described above. However, because the liftglass 100 is connected to a flap raising device with a greater opening force, the liftglass 100 is brought fully to the open position without a preliminary manual lift. This modification provides a distinct advantage for a user who wishes to open the liftglass 100 when his hands are full. He simply has to pass an object near to the proximity sensor 130 and the liftglass 100 opens to allow him to deposit his items in the vehicle.

Alternatively, the device can be provided without a flap raising device. In this case, once the liftglass 100 is unlatched, the user raises it entirely manually.

The liftglass 100 does not have to be pivoted about its top edge 105. It can be pivoted about its bottom edge 106, either of its side edges or about a specific pivot provided at a point on its perimeter. In these cases, a flap opening device can be provided, corresponding to the flap raising device described above.

The device can also be used for other doors of a vehicle such as the side doors or the tailgate 115. It enables the handles to be kept small and inconspicuous since they do not need to be pivotable to release the latch. Accordingly, the doors can be fabricated more cheaply and they can attain a smoother and more aerodynamic finish.

The device can be used for the doors of a vehicle that the user simply does not wish to touch, such as the bonnet or the flap of the fuel cap. By providing a proximity sensor, these dirty doors and gates can be released without the dirt being transferred onto the hands.

The device can also be implemented in doors that cannot be seen easily. For example, the glove-box in the vehicle interior often requires the handle to be squeezed or twisted in a certain manner for the latch to be released. This can often be difficult to effect since the vehicle interior is often dark and a light, if any, is not activated until the glove-box is open. By providing a proximity sensor over the handle, a user is able to open the glove-box just by feeling for the handle, without having to see it and understand its opening mechanism.

In addition, the sensor arrangement can be employed in any device which contains a latched flap member.

For example, the device can be implemented in windows in buildings to avoid the necessity of providing mechanical handles. Also, the device enhances security in a building fitted with such windows since all the windows can be centrally locked by deactivating all of the sensors together. The landlord does not have to rely on each of the windows being individually locked or check them whenever the building is to be left unoccupied.

As mentioned with respect to the liftglass embodiment, it is not necessary to provide the proximity sensor on the handle. The proximity sensor can be located anywhere on the surface of the opening flap member where it is easily accessible. Alternatively, it can be located on a nearby surface where that is more convenient.

The arrangement can also be implemented in applications where a user does not wish to touch the surface of the flap member he wishes to open. For example, for cupboards containing radioactive materials or biohazards, or for waste bins containing chemical or other hazardous waste.

Features of any of the above embodiments and modifications can be combined or interchanged as required.

## Claims

1. An actuating device comprising a flap member (100) pivotably connected over an opening in a wall member (115) wherein the flap member (100) is adjustable between a locked state, in which the flap member (100) is held substantially coplanar with the wall member (115) by a latching member, and a released state, in which the flap member (100) is free to pivot about its connection to the wall member (115) **characterised by** a proximity sensor (130), which is arranged so that upon actuation it causes the device to move from the locked state to the released state.

2. An actuating device according to claim 1 wherein the flap member is a liftglass (100) of a vehicle.

3. An actuating device according to claim 2 wherein the wall member is a tailgate (115) of a vehicle.

4. An actuating device according to any preceding claim wherein the proximity sensor (130) is arranged so that upon actuation it causes the latching member to be released.

5. An actuating device according to any preceding claim wherein the proximity sensor (130) is a passive infrared proximity sensor.

6. An actuating device according to any preceding claim wherein the proximity sensor (130) is provided in a handle (120) of the flap member (100).

7. An actuating device according to any of claims 1 to 5 wherein the proximity sensor (130) is integrated into the flap member (100).

8. An actuating device according to any preceding claim wherein the device includes a flap opening device which is arranged so that when the flap member (100) is released or partially open, the flap opening device opens the flap member (100) to a fully open position.

9. An actuating device according to any preceding claim further comprising a movable handle which is pivotable between a flat position, in which it lies against the flap member (100), and a raised position, in which it extends away from the flap member (100) revealing a clean underside of the movable handle, wherein the movable handle is moved to the raised position in response to a signal from the proximity sensor (130).

10. A vehicle including an actuating device according to any preceding claim.
